# EUROPÄISCHE PATENTANMELDUNG

(11) **EP 0 770 334 A1**
(43) Veröffentlichungstag der Anmeldung: **02.05.1997**
(21) Anmeldenummer: 96890118.1
(22) Anmeldetag: 10.07.1996
(51) Int. Cl.: A23K 1/10, A23K 1/14

(54) **Verfahren zur Aufbereitung biogener Rohstoffe sowie Anlage zur Durchführung des Verfahrens**

(30) Priorität: 11.07.1995 AT 1178/95
(71) Anmelder: ENCO Energie Componenten Gesellschaft m.b.H., 4812 Pinsdorf (AT)
(72) Erfinder: Grausgruber, Günther, 4863 Seewalchen (AT); Hackmair, Walter, 4812 Pinsdorf (AT)
(74) Vertreter: Köhler-Pavlik, Johann, Dipl.-Ing.

(57) **Zusammenfassung**

Biogene Abfälle werden mittels LKW od. dgl. einer Vorsortierungsanlage 9 zugeführt, in welcher die biogenen Abfälle von Metallteilen befreit und mit Waschflüssigkeit behandelt werden. Die so aufgelockerte Masse wird einem Puffersilo 2 zugeführt, aus welchem der Bioabfall in eine Mühle bzw. in einen Walzenbrecher 3 gelangt, aus dem eine Produktpumpe 29 das gemahlene Biomaterial einem Vorrats- oder Lagerbehälter bzw. Silo 5 od. dgl. zuführt, aus welchem das Biogut einem Kochbehälter 35 od.dgl. zur Sterilisation und sodann einer Biogasanlage, einer kommunalen Kläranlage oder der Tierfütterung zugeführt wird.

## Beschreibung

Die Erfindung betrifft ein Verfahren zur Aufbereitung biogener Rohstoffe nach dem Oberbegriff des Patentanspruches 1.

Ein weiterer Gegenstand der Erfindung ist eine Anlage zur Durchführung des Verfahrens gemäß dem Oberbegriff des Anspruches 3.

Küchenabfälle wurden üblicherweise deponiert und kompostiert oder einfach auf eine Müllhalde geschüttet. Durch kürzlich erlassene gesetzliche Vorschriften müssen biogene Abfälle so entsorgt werden, daß diese wertvollen Rohstoffe einer Wiederverwertung zugeführt werden können. Durch diese Bestimmungen dürfen pflanzliche und tierische Abfälle aus der Zubereitung und dem Verzehr von Nahrungsmitteln nicht mehr über den Kanal entsorgt werden. Bei der Verwertung solcher Abfälle müssen unter anderem Tierseuchengesetze beachtet werden.

Bisher war es nicht möglich, biogene Abfälle mit Knochen und größeren Stücken einer wirtschaftlichen und zufriedenstellenden Verwertung zuzuführen.

Durch die AT 322 478 B ist ein Verfahren zur Verarbeitung von Hausmüll bekanntgeworden, bei dem die Abfälle gemahlen und homogenisiert, mit einem wässerigen Medium gemischt und dann wieder von dem wässerigen Medium getrennt werden, wonach die bereits gemahlenen und homogenisierten Abfälle befeuchtet und dann einem Druck in der Größenordnung von 300 bis 500 Bar ausgesetzt werden, wobei die Masse während des Preßvorganges zwecks Entnahme der flüssigen Bestandteile von Sonden durchquert wird, so daß einerseits durch die Sonden herausgeführte Schlämme und anderseits komprimierte Trockenmassen erhalten werden. Bei diesem Verfahren sind in der gewonnenen Masse allfällige Viren, z.B. BSE, verblieben, so daß die Masse, insbesondere als Futtermittel ungeeignet war.

Durch die DE 26 27 745 A1 ist ein Verfahren zur Herstellung von Futtermitteln aus Lebensmittelabfällen bekanntgeworden, bei welchem eine erste grobe Zermalmungsphase der Lebensmittelabfälle durchgeführt wird, worauf das zermalmte Material unter Druck einer senkrechten Kochkammer von unten nach oben zugeführt und dann durch eine axiale, mit Schaufeln versehene Welle während des Kochens bewegt wird, und anschließend vom gekochten Material die sich während dem Kochen gebildete Flüssigkeit abgetrennt und das Material einer weiteren Feinzermalmungsphase unterzogen wird. Bei diesem Verfahren verbleiben in der Kochphase noch größere Abfallstücke, z.B. Knochen, in welchen noch Bakterien oder Viren verbleiben können, welche das Futtermittel beeinträchtigen. Außerdem bewirken die Schaufel der Welle nur eine Beförderung des Gutes von unten nach oben, ohne jedoch die gegenseitige Lage der Massenteile zueinander zu verändern.

Aufgabe der Erfindung ist die Schaffung von Maßnahmen zur Aufbereitung biogener Rohstoffe, Abfälle od. dgl. unter Beachtung bestehender Tierseuchen- und Abfallwirtschaftsgesetze in einem vorwiegend automatisch ablaufenden Vorgang zu verwertbaren Rohstoffen, insbesondere Futtermitteln, wobei die auftretenden Umweltbelastungen in vertretbarem Ausmaß geringgehalten werden.

Diese Aufgabe wird erfindungsgemäß durch die Maßnahme nach dem kennzeichnenden Teil des Patentanspruches 1 gelöst.

Eine besonders wirksame Sterilisation wird durch die Maßnahme nach Patentanspruch 2 erzielt.

Durch die Maßnahme nach Anspruch 3 wird eine gute Durchmischung des Rohstoffes im Kochbehälter erzielt.

Durch die Maßnahme nach Anspruch 4 wird in einfacher Weise ein genauer Betrieb der Anlage erzielt.

Die Erfindung wird anhand der Zeichnung erläutert, in welcher in schematischer Darstellung
Fig. 1a und 1b eine Seitenansicht,
Fig. 2a und 2b eine Draufsicht einer Anlage zur Aufbereitung des Gutes,
Fig. 3 eine schematische Darstellung einer Zellradschleuse mit darunter liegenden Walzen einer Mühle bzw. eines Brechers,
Fig. 4 einen Teil der Anlage in größerem Maßstab und
Fig. 5 ein Schema für die Aufbereitung der biogenen Abfälle zeigt.

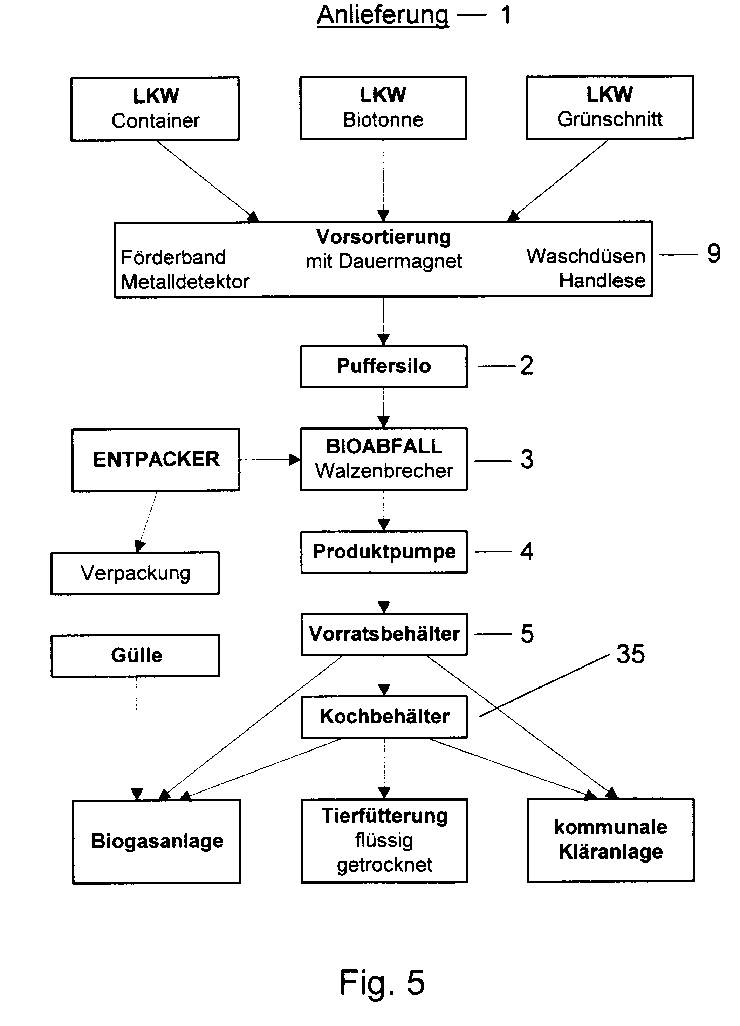

Die Anlage weist im wesentlichen eine Übergabeeinheit 1 auf, zu welcher die Anlieferung des biogenen Abfalles, wie Fig. 5 schematisch andeutet, mit LKW, z.B. in Containern, Biotonnen oder als Grünschnitt gelangt. An die Übergabeeinheit 1 folgt eine Vorsortierung, ein Schwemmkanal 9 od. dgl. und in der Folge sodann ein Puffersilo 2 und eine Mühle 3, welche beispielsweise als Walzenbrecher ausgebildet sein kann. Anschließend ist ein Transportsystem 4 vorgesehen, welches mit einer Produktpumpe ausgestattet sein kann. Zur Behandlung des Bioabfalls ist weiters ein Vorrats- oder Lagerbehälter bzw. ein Silo 5 od. dgl. und ein Kochbehälter 35 od. dgl. vorgesehen. Zur Reinigung der Container, Biotonnen od. dgl. dient eine Waschkabine 6.

Die Übergabeeinheit 1 oder Abfallannahme besitzt ein schwenkbares Podest 7, auf welchem eine Bedienungsperson 8 Container, Biotonnen oder andere Transportbehältnisse, in welchen der entsorgte Abfall ankommt, auf Haken, Griffbügel 12 od. dgl. hängt, welche den Container od. dgl. heben, sodaß er kippt und den Inhalt in eine Vorsortierungsanlage 9 entleert, in welchem der Abfall auf einem Aufgabe- oder Förderband 10 transportiert wird, wobei der Abfall durch Waschflüssigkeit gereinigt wird, welche durch oberhalb des Förderbandes angeordnete Düsen 11 einströmt. Solche Düsen können auch unterhalb des Förderbandes 10 angeordnet sein. Das Aufgabeband 10 kann auch eine händisch betriebene Sortiereinrichtung aufweisen, in der Teller, Gabeln, usw. ausgeschieden werden.

Während des Transportes des Abfalls werden Metallteile, z.B. durch mindestens ein, oberhalb des Förderbandes angeordnetes, nicht dargestelltes, Magnet oder Magnetband entfernt. Durch das Waschwasser entsteht eine Auflockerung des vorsortierten Bioabfalles, welcher dadurch leicht förderbar ist. Der so aufgelockerte Bioabfall gelangt in das Puffersilo 2.

In der Vorsortierungsanlage 9 kann auch ein Metalldedektor verwendet werden, der das Band 10 stoppt und zurücklaufen läßt, um einen Bestandteil, der auszusortieren ist, aus dem Bioabfall herausklauben zu können.

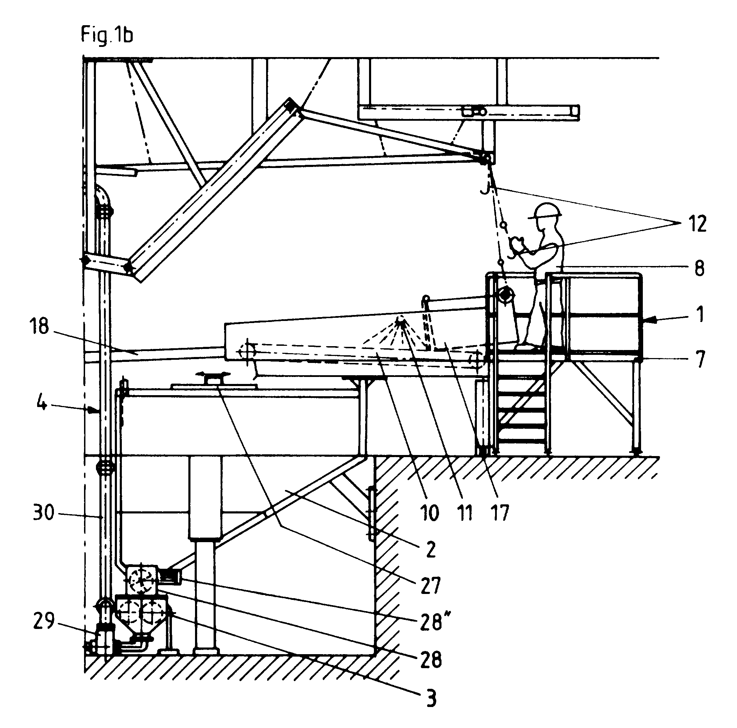

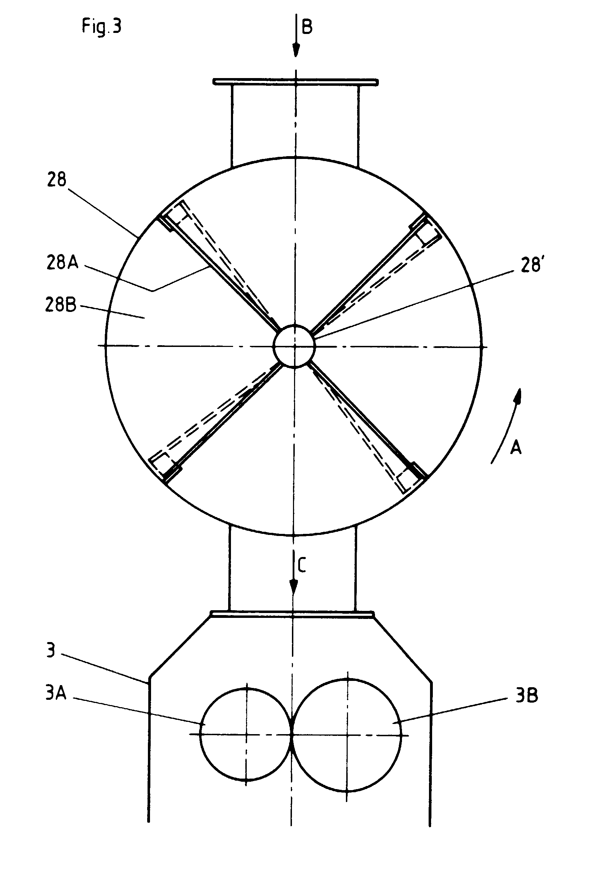

Vom Förderband 10 gelangt der Abfall in das Puffersilo 2. Das Puffersilo 2 ist zur Vermeidung von Geruchsverbreitung durch einen Deckel 27 verschließbar und bodenseitig mit einer Zellradschleuse 28 zum Vorzerkleinern und Dosieren des Abfalls versehen. Der Deckel 27 wird für die Beschickung des Puffersilos 2 geöffnet und danach wieder geschlossen. Die Zellradschleuse 28 nach Fig. 3 besitzt ein Zellrad 28', welches sich in Richtung des Pfeiles A dreht und durch einen eigenen Motor 28" (Fig. 1b) angetrieben ist. Das Zellrad 28' ist mit Flugeln 28A versehen, welche Kammern 28B begrenzen, in welche der Abfall in Richtung des Pfeiles B in den oberen Teil eintritt und in Richtung des Pfeiles C aus dem unteren Teil austritt. Die Schleuse hat die Aufgabe, Teile, wie Krautköpfe u. a., welche größer als die Kammern 28B sind, an den Kanten der Flügeln 28A zu zerkleinern und eine gleichmäßige Zufuhr des des Gutes zur nachfolgenden Mühle bzw. zum Walzenbrecher 3 zu sichern.

Nicht brechbare Teile wie Keramikteller, Besteck in größerer Ausführung wie Schöpflöffel od. dgl. blockieren die Schleuse, sodaß sie stehenbleibt und händisch ausgeräumt werden muß. Dadurch wird sichergestellt, daß nicht große, unbrechbare Teile in die Mühle bzw. in den Walzenbrecher 3 gelangen, in welcher vor allem Knochen, die durch die Zellradschleuse 28 nicht zerkleinert werden konnten, auf eine gewünschte Korngröße gemahlen werden, sodaß die Knochen, z.B. von Schweinen, ohne Probleme gefressen und im Darm derselben verarbeitet werden können.

Die Mühle bzw. der Walzenbrecher 3 besitzt im vorliegenden Falle zwei Walzen 3A, 3B, welche einzeln angetrieben sein können und so gelagert sind, daß sie zueinander verstellbar sind, um den Walzenspalt und damit die gewünschte Korngröße des gemahlenen Gutes einstellen zu können.

Die Mühle bzw. der Walzenbrecher 3 kann auch zwei Walzenpaare haben, wobei im ersten Walzenpaar eine Vorzerkleinerung und im zweiten die endgültige Zerkleinerung erfolgt. Es können auch zwei Mühlen vorhanden sein, wobei in der ersten Mühle ein größerer Brechspalt vorhanden ist als in der zweiten Mühle. Wenn zwei Mühlen vorhanden sind, können sie entweder getrennt voneinander oder gemeinsam über ein Übersetzungsgetriebe angetrieben werden.

Dem in dieser Stufe anfallenden Bioabfall kann auch der Rest entleerter oder durch Zeitablauf zu entsorgender Verpackungen beigemischt werden. Die Packungen können aus einem Entpacker einer Wiederverwertung zugeführt werden.

Aus der Mühle bzw. dem Walzenbrecher 3 gelangt das Gut mittels einer Pumpe 29 und einer Produktleitung 30 in einen Vorrats- oder Lagerbehälter bzw. ein Silo 5 od. dgl., in dem eine Vergleichmäßigung des Endproduktes stattfindet. Der Vorrats- oder Lagerbehälter bzw. das Silo 5 od. dgl. kann als stehender Zylinder mit nach unten trichterförmig zulaufendem Boden ausgebildet sein. Dem Vorrats- oder Lagerbehälter bzw. Silo 5 od. dgl. können Materialien beigemengt werden, wobei auch Proben entnommen werden können. In diesem Vorrats- oder Lagerbehälter bzw. Silo 5 od. dgl. kann auch ein Rührwerk vorhanden sein.

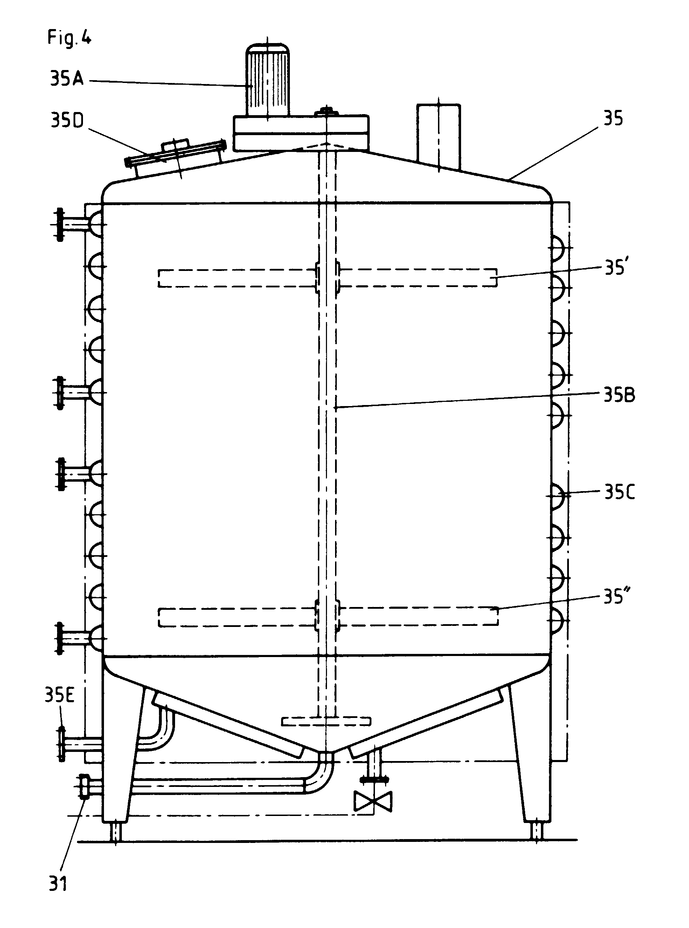

An den Vorrats- oder Lagerbehälter bzw. das Silo 5 od. dgl. schließt ein Kochbehälter 35 od. dgl. an, welcher wie Fig. 4 zeigt, als Rührwerksbehälter mit einer Erhitzungsanlage ausgebildet sein kann. Im Kochbehälter 35 od. dgl. sind zwei Rührwerksschaufeln 35', 35" vorgesehen, welche das Gut vergleichmäßigen. Die Schaufeln 35', 35" sind übereinandergeordnet auf einer gemeinsamen, von einem Motor 35A angetriebenen Welle 35B angebracht. Um den Kochbehälter 35 od. dgl. herum ist eine Heizungsanlage, im vorliegenden Falle eine Heizspirale 35C, gewunden, welche aus mehreren übereinanderliegenden Heizstufen bestehen kann und vorzugsweise mit Heißdampf bzw. Heißwasser betrieben wird und den Inhalt des Kochbehälters 35 od. dgl. auf 90 bis 100 °C erhitzt. Die Verkochung und anschließende Abkühlung des Rohstoffes erfolgt automatisch nach einem vorgegebenen Programm, welches gewährleistet, daß ungekochte Reststoffe nicht entnommen werden können und ein ungereinigter Behälter nicht befüllt werden kann.

Die Heizung ist eine Zonenheizung, welche je nach Bedarf stufenweise ein- und abgeschaltet werden kann. Mit 35D ist ein Mannloch zum Reinigen des Kochbehälters 35 od. dgl. bezeichnet. Die untere Leitung 35E ist eine Ablaßleitung, die allenfalls auch zur Reinigung des Bodens des Kochbehälters 35 od. dgl. dienen kann.

Nach einem Sterilisationsvorgang im Kochbehälter 35 od. dgl. kann das so vorbereitete keimfreie Produkt über eine Entleerungseinrichtung 31 gemäß einer ersten Möglichkeit nach einem entsprechenden Abkühlvorgang, z.B. auf 20 bis 30 °C, in Transportgefäße abgefüllt und direkt zur Verfütterung in einen landwirtschaftlichen Betrieb, z.B. für Schweine gebracht werden.

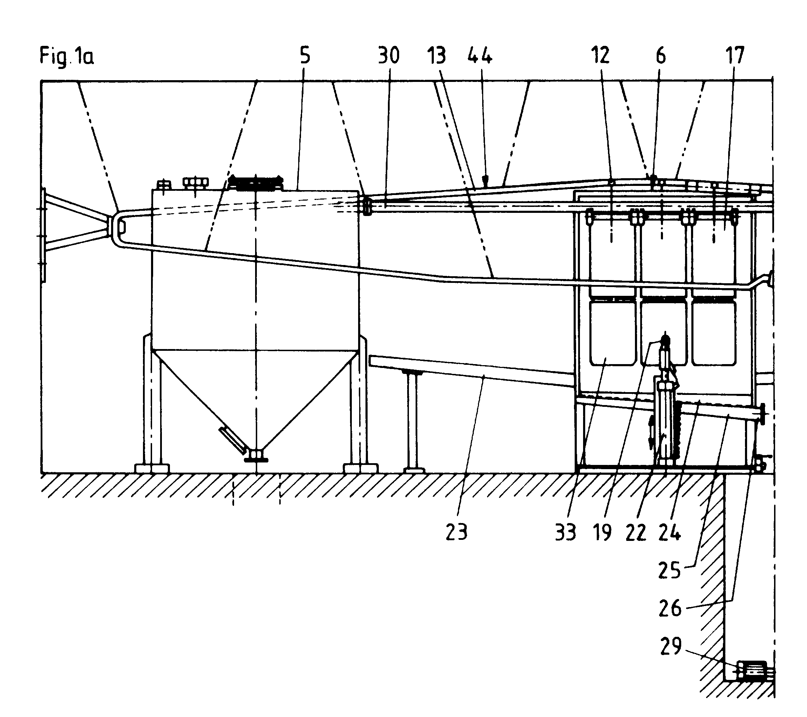

Eine weitere Möglichkeit wäre, das Produkt aus dem Vorrats- oder Lagerbehälter bzw. Silo 5 od. dgl. über entsprechende Pumpleitungen in eine Anlage zur Fermentation, z.B. zur Erzeugung von Biogas zu bringen. In die Biogasanlage kann außerdem auch, wie in den Fig. 1 und 5 angedeutet ist, Gülle zugeführt werden, um die Ausbeute der Biogase wesentlich zu erhöhen.

Eine weitere Möglichkeit bestünde darin, daß man, falls größere Mengen an Fertigprodukten vorliegen, diese über eine Trocknungsanlage leitet und dann zu leicht lagerfähigen Pellets verarbeitet.

Eine weitere Möglichkeit besteht darin, daß das Gut aus dem Vorrats- oder Lagerbehälter bzw. Silo 5 od. dgl. oder aus dem Kochbehälter 35 od. dgl., wie in den Fig. 1 und 5 angedeutet ist, einer kommunalen Kläranlage zugeführt wird, in welcher das behandelte Biogut den Abwässern beigemengt wird und dort die Menge des entwickelten Biogases erhöht und damit zum besseren Betrieb der Kläranlage beiträgt.

Die Transportbehältnisse 17 stehen nach dem Entleeren kopf und gelangen auf das Transportsystem 4, welches eine Transportschiene 13 aufweist, auf der die Haken oder Griffbügel 12 auf Rollen laufen und händisch verschoben werden können. Zumindest ein Teil der Schiene 13 ist mit einem Gefälle versehen, welches eine Staustrecke bildet, von wo die Behältnisse 17 von einer Fördereinrichtung erfaßt und durch die Waschkabine 6 geführt werden.

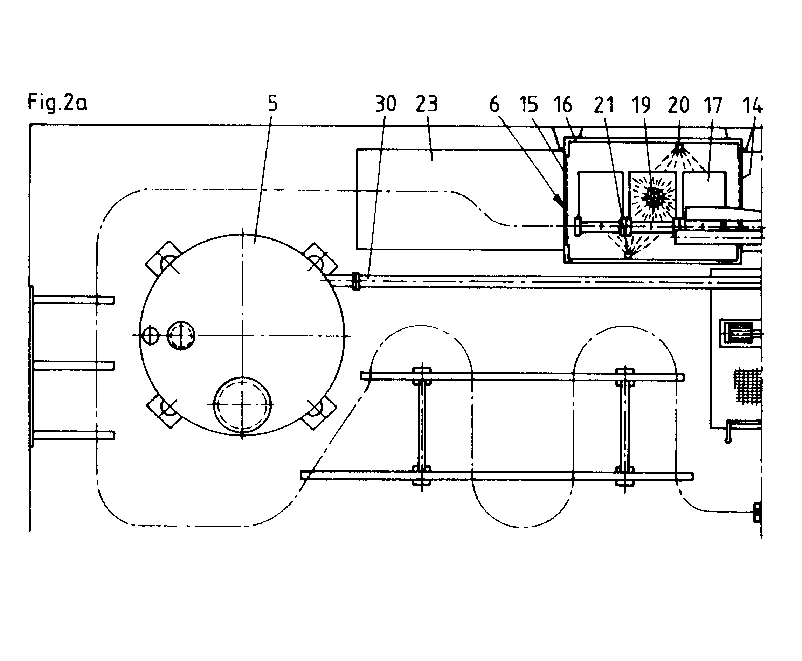

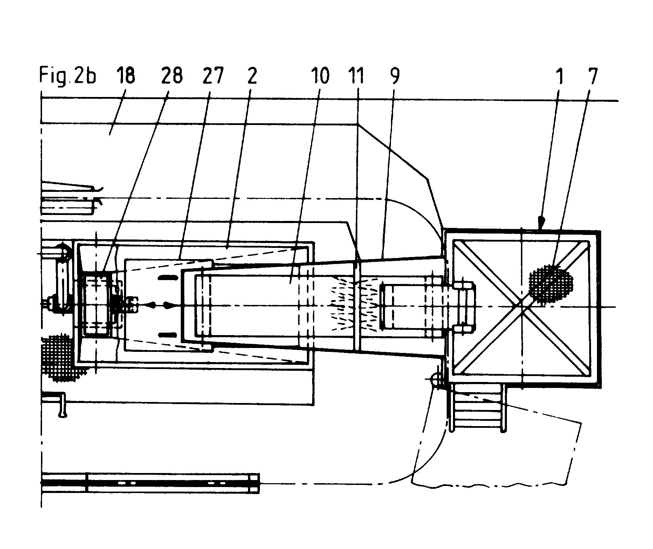

Die Waschkabine 6 ist ein- und ausgangseitig durch je einen 16 verkleidet und befindet sich, wie Fig. 2a zeigt, seitlich versetzt zur Längsrichtung der Vorsortierung, des Schwemmkanals 9 od. dgl.

Vor dem Eingang der Waschkabine 6 befindet sich eine Tropftasse 18 zum Auffangen allfälliger, im entleerten Transportbehältnis haften gebliebener, Reste der Abfälle.

In der Waschkabine 6 ist mindestens ein Sprühkreisel 19 vorgesehen, der auf einer teleskopartigen Sprüheinheit 22 sitzt und welcher, nachdem das Transportbehältnis 17 über der Sprüheinheit 22 steht, und diese hinaufgegangen ist, im Transportbehältnis kreist und so zumindest die Innenwand und zumindest die Innenseite des nach unten hängenden Deckels 33 des Transportbehältnisses reinigt. Nach erfolgter Reinigung des Transportbehältnisses geht die Sprüheinheit 22 mit dem Sprühkreisel 19 wieder hinunter, worauf das Transportbehältnis 17 weiter befördert wird. Außerdem sind außen Waschdüsenleisten 20 bzw. 21 zum Reinigen der Außenwand der Transportbehältnisse 17 vorgesehen, wobei eine pneumatische Taktsteuerung für den taktweisen Vorschub der Transportbehältnisse 17 sorgt.

An der Ausgangseite der Waschkabine 6 befindet sich eine zweite Tropftasse 23 bzw. ein Tropfteilrost zum Auffangen der Reste der Waschflüssigkeit, welche aus den gereinigten Waschbehältnissen 17 nach Austritt aus der Waschkabine 6 abtropft. Allfällige Abfallreste kommen mit Hilfe von Waschwasser zurück in das Silo 2. Das von den Verunreinigungen über den Rost bzw. ein Röhrensieb gereinigte Wasser wird wieder in den Kreislauf zurückgeführt.

Am Boden der Waschkabine 6 befindet sich ein Grobteilrost 24 mit einer darunter befindlichen Auffangwanne 25, die ebenso wie der Grobteilrost 24 ein Gefälle in der Richtung zu einem Ablauf 26 besitzt.

Das von den Verunreinigungen über den Rost bzw. das Röhrensieb gereinigte Wasser wird im Kreislauf verwendet.

## Patentansprüche

1. Verfahren zur Aufbereitung biogener Rohstoffe, insbesondere von Küchenabfällen zur Gewinnung verwertbarer Rohstoffe, z.B. Biogas, Futtermittel oder für Kläranlagen, wobei die Rohstoffe einer Sammelstelle zugeführt, von unbrauchbaren Teilen, z.B. Metallteilen befreit, mit Flüssigkeit, insbesondere Wasser behandelt, z.B. aufgelockert und bzw. oder gewaschen und allenfalls zumindest teilweise gemahlt werden, worauf das so gewonnene Produkt erhitzt wird, dadurch gekennzeichnet, daß die Erhitzung des Produktes bis zur Sterilisation erfolgt.

2. Verfahren nach Anspruch 1, dadurch gekennzeichnet, daß die Rohstoffe auf etwa 90 - 100 °C erhitzt und sodann auf 20 - 30 °C abgekühlt werden.

3. Anlage zur Durchführung des Verfahrens nach Anspruch 1 unter Verwendung einer Übergabeeinheit (1) für den Abfall bzw. Rohstoff, einer Zerkleinerungseinheit für den Abfall bzw. den Rohstoff, z.B. einer Mühle bzw. eines Walzenbrechers und eines Kochbehälters od.dgl., dadurch gekennzeichnet, daß der Kochbehälter (35) od.dgl. mit einem Rührwerk ausgestattet ist.

4. Anlage nach Anspruch 3, dadurch gekennzeichnet, daß der Kochbehälter (35) od. dgl. mit einer Heizeinrichtung zur Erwärmung und Sterilisierung des Gutes, vorzugsweise nach einem automatisch ablaufenden, voreingestellten Programm, ausgestattet und bodenseitig mit einer Entnahmestelle für das zum Verbrauch bestimmte Gut ausgebildet ist.
